(19)

**Europäisches Patentamt**

**European Patent Office**

**Office européen des brevets**

(11) **EP 4 776 241 A1**

(12) **EUROPEAN PATENT APPLICATION**

(43) Date of publication:
**15.07.2026 Bulletin 2026/29**

(21) Application number: **25221087.7**

(22) Date of filing: **05.12.2025**

(51) International Patent Classification (IPC):
**G06V 10/80** (2022.01)   **G06V 20/13** (2022.01)

(52) Cooperative Patent Classification (CPC):
**G06V 20/13; G06V 10/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.01.2025 IN 202521001796**

(71) Applicant: **Tata Consultancy Services Limited
Mumbai, Maharashtra 400 021 (IN)**

(72) Inventors:
• **CHAUDHURI, Ushasi
411057 Pune (IN)**
• **DESHPANDE, Shailesh Shankar
411028 Pune (IN)**
• **PAL, Arpan
700091 Kolkata (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM TO GENERATE DECISION-FUSED CLASSIFICATION USING DIFFERENT MODALITIES IN REMOTE SENSING APPLICATIONS**

(57) The disclosure relates generally to method and system to generate decision-fused classification map using different modalities in remote sensing applications. In remote sensing applications, the problem of missing data from satellite images occurs due to various environmental factors and spatial resolution provides inconsistent class labels during segmentation. The method receives from each satellite among a plurality of satellites a plurality of remote sensing images capturing a land use and land cover (LULC) geographical area on earth. Each pretrained classifier obtains the plurality of remote sensing images to generate a segmentation map. Further, Kolmogorov Arnold networks (KAN) decision fusion combines two or more closest segmentation maps using an ontological knowledge tree to determine a minimal common parent class based on at least one satisfying criteria. Finally, a fused classification map is generated to obtain finer grained LULC classes for each remote sensing image using the ontological knowledge tree.

300

receive from each satellite among a plurality of satellites a plurality of remote sensing images capturing a land use and land cover (LULC) geographical area on earth — 302

process the plurality of remote sensing images received from each satellite with corresponding pretrained classifier among a plurality of classifiers to generate a segmentation map — 304

perform Kolmogorov Arnold networks (KAN) decision fusion by combining two or more closest segmentation maps by each of the satellite using an ontological knowledge tree to determine a minimal common parent class based on at least one satisfying criteria — 306

generate a fused classification map to obtain a finer grained land-cover class label of land cover classes for each remote sensing image using the ontological knowledge tree, the minimal common parent class and the decision fusion of two or more closest segmentation maps — 308

**FIG.3**

EP 4 776 241 A1

**Description**

CROSS-REFERENCE TO RELATED APPLICATIONS AND PRIORITY

The present application claims priority to Indian application no. 202521001796, filed on January 8, 2025.

TECHNICAL FIELD

The disclosure herein generally relates to data fusion, and, more particularly, to method and system to generate decision-fused classification map using different modalities in remote sensing applications.

BACKGROUND

Over the last several decades, human-induced land use and land cover (LULC) changes affects ecosystems across the globe. Emergence of large variety of new sensors with various characteristics have increased the possibility to collect different kinds of observations over the same geographical area considerably increased remote sensing data which can be generically referred as multimodal. These sensors capture different modalities (for example radar, Lidar or optical) remote sensing images of geographical areas. Each of these sensor modalities have their own advantages, for example, a panchromatic satellite would have very high spatial resolution data, a hyperspectral satellite captures the spectral signature very effectively at the cost of reduced spatial resolution. Similarly, a LiDAR imagery captures the topographic variations of a surface, while a synthetic aperture radar (SAR) data is incapable of providing very high-resolution images independent of every kind of weather conditions. Complementary observations exploit land cover mapping purposes, which is a core remote-sensing application and the necessary input for a large number of public policies and environmental models. Consequently, combining remote-sensing data with different characteristics is a standard remote-sensing problem that has been extensively investigated.

Most existing decision fusion methods do not explicitly consider that input data sources have different spatial resolutions, and do not explicitly deal with both semantic and spatial uncertainties. For example, satellites such as Oceansat - 1 and -2 (8-band multispectral satellite) have been specifically deployed to monitor oceans, RISAT - 1 and -2 (SAR sensor) are specifically designed for border surveillance. They have very high spatial resolution and are unaffected by weather changes. Hence, SAR sensors have been chosen specifically for detecting flooding because flat surfaces act as specular reflectors and are found to be very effective for differentiating between water and non-water pixels. However, SAR data is not helpful to interpret data visually. It has less temporal resolution and has limited spectral resolution. This leads to difficulty in understanding areas of prediction and difficulty in differentiating between dense residential areas and dense forest areas (example San Fransisco and Sacramento region).

However, existing methods lack fusing remote sensing data with multi-spectral data for accurate predictions such as multi-spectral data, higher spectral resolution, better visual interpretability, and relatively higher temporal resolution. Also, data fusion in remote sensing applications increases challenge in designing compatible model with different resolutions from different data modalities.

SUMMARY

Embodiments of the present disclosure present technological improvements as solutions to one or more of the above-mentioned technical problems recognized by the inventors in conventional systems. For example, in one embodiment, a system to generate decision-fused classification map using different modalities in remote sensing applications is provided. The system includes receiving from each satellite among a plurality of satellites a plurality of remote sensing images capturing a land use and land cover (LULC) geographical area on earth. Further, each pretrained classifier among a plurality of classifiers the plurality of remote sensing images received from each satellite with corresponding pretrained classifier among a plurality of classifiers to generate a segmentation map. Each classifier is specifically pretrained to process the remote sensing images captured with corresponding satellite type. Further each classifier among a plurality of classifiers generates a segmentation map for the plurality of remote sensing images. Furthermore, Kolmogorov Arnold networks (KAN) decision fusion combines two or more closest segmentation maps using an ontological knowledge tree to determine a minimal common parent class based on at least one satisfying criteria. Finally, a fused classification map is generated to obtain a finer grained land-cover class label of land cover classes for each remote sensing image using the ontological knowledge tree, the minimal common parent class and the decision fusion of two or more closest segmentation maps.

In another aspect, a method to generate decision-fused classification map using different modalities in remote sensing applications is provided. The system includes receiving from each satellite among a plurality of satellites a plurality of remote sensing images capturing a land use and land cover (LULC) geographical area on earth. Further, each pretrained classifier among a plurality of classifiers the plurality of remote sensing images received from each satellite with corresponding pretrained classifier among a plurality of classifiers to generate a segmentation map. Each classifier is specifically pretrained to process the remote sensing images captured with corresponding satellite type. Further each classifier among a plurality of classifiers generates a segmentation map for the plurality of remote sensing images. Furthermore, Kolmogorov Arnold networks (KAN) decision fusion combines two or more closest segmentation maps using an ontological knowledge tree to determine a minimal common parent class based on at least one satisfying criteria. Finally, a fused classification map is generated to obtain a finer grained land-cover class label of land cover classes for each remote sensing image using the ontological knowledge tree, the minimal common parent class and the decision fusion of two or more closest segmentation maps.

In yet another aspect, a non-transitory computer readable medium provides one or more non-transitory machine-readable information storage mediums comprising one or more instructions, which when executed by one or more hardware processors perform actions includes an I/O interface and a memory coupled to the processor is capable of executing programmed instructions stored in the processor in the memory to generate decision-fused classification map using different modalities in remote sensing applications is provided. The system includes receiving from each satellite among a plurality of satellites a plurality of remote sensing images capturing a land use and land cover (LULC) geographical area on earth. Further, each pretrained classifier among a plurality of classifiers the plurality of remote sensing images received from each satellite with corresponding pretrained classifier among a plurality of classifiers to generate a segmentation map. Each classifier is specifically pretrained to process the remote sensing images captured with corresponding satellite type. Further each classifier among a plurality of classifiers generates a segmentation map for the plurality of remote sensing images. Furthermore, Kolmogorov Arnold networks (KAN) decision fusion combines two or more closest segmentation maps using an ontological knowledge tree to determine a minimal common parent class based on at least one satisfying criteria. Finally, a fused classification map is generated to obtain a finer grained land-cover class label of land cover classes for each remote sensing image using the ontological knowledge tree, the minimal common parent class and the decision fusion of two or more closest segmentation maps.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an exemplary data fusion system to generate decision-fused classification map using different modalities in remote sensing applications, according to some embodiments of the present disclosure.

FIG.2 is a functional block diagram of the data fusion system to categorize and label pixels with separate classification engines for each modality using the system of FIG.1, in accordance with some embodiments of the present disclosure.

FIG.3 illustrates a flow diagram of the method implemented for decision-fused approach for remote sensing data using the system of FIG.1, in accordance with some embodiments of the present disclosure.

FIG.4 illustrates an object based semantic classification method for high resolution remote sensing imagery using ontology using the system of FIG.1, in accordance with some embodiments of the present disclosure.

FIG.5 illustrates an adaptive distance based expectation maximization (ADEM) framework for pixel classification with less noisy classified input image with high frequency contour information using the system of FIG.1, in accordance with some embodiments of the present disclosure.

DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

**GLOSSARY:**

The term "Modalities" refers to the satellite images captured from different kinds of sensors. For example, multispectral, hyperspectral, panchromatic, synthetic aperture radar, digital elevation maps, etc. They primarily differ in their spatial, spectral, temporal, and radiometric resolutions. They may also differ in the spectral range and bandwidth they operate in.

"Ontological knowledge tree" refers to methodical and orderly way of representing knowledge within a particular domain, including concepts and relationships between them. If the knowledge is represented in a hierarchical manner, a tree structure is found to be most effective in terms of capturing parent-child relationships.

"Classification map" refers to a data classification process in which each pixel representing a geolocation gets a classification label based on the application and cumulatively together forms a map when we look at a broader geo-location.

"Decision fusion" refers to the process of combining the decisions taken by different classifiers to achieve a common consensus, that is better than the decisions made by the individual classifiers. Decision fusion is done with a primary goal to improve the overall performance of the classification task by exploiting multiple weak classifiers

"Class pixels" refers to pixels referring to reference entities of specific object or areas associated with a geographical region.

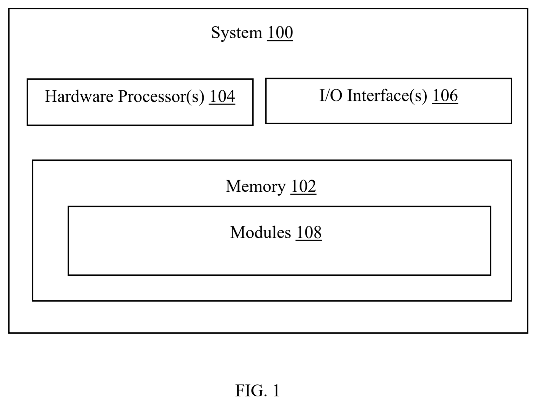

Referring now to the drawings, and more particularly to FIG.1 through FIG.5, where similar reference characters denote corresponding features consistently throughout the figures, there are shown preferred embodiments, and these embodiments are described in the context of the following exemplary system and/or method.

Satellite data provides a comprehensive coverage of the earth's surface, including remote and inaccessible areas. Further, depending on the geo-orbit of the satellite, they revisit the same place at a periodic interval, resulting in a continuous monitoring of the target areas. This makes them essential for predicting and detecting various disasters by providing essential information for tracking storms, floods, wildfires, and other natural disasters, thereby enabling timely responses to mitigate the damage. Various satellites essentially pan the same geographical region of the earth's surface, each collecting different modalities of data.

Essentially, each of these sensor modalities have their own advantages, for example, a panchromatic satellite would very high spatial resolution data, a hyperspectral satellite captures the spectral signature very effectively at the cost of reduced spatial resolution. Similarly, LiDAR imagery captures the topographic variations of a surface, while a synthetic aperture radar (SAR) data is incapable of providing very high-resolution images independent of every kind of weather condition.

This leads to difficulty in understanding the areas of prediction and difficulty in differentiating between dense residential areas and dense forest areas (example the famous San Francisco and Sacramento region). To compensate for this, fusing the SAR predictions with multi-spectral data to refine the predictions as multi-spectral data has higher spectral resolution, better visual interpretability, and relatively higher temporal resolution. Oceans, RISAT - 1 and -2 (SAR sensor) are specifically designed for border surveillance is an essential solution. They have very high spatial resolution and are unaffected by weather changes.

Common practice in decision fusion is to bring all the remote sensing images to a common grid and then perform feature level fusion or similar such fusion to classify image for land use land cover (LULC) directly. There are two possible approaches to achieve, 1. Either the data with higher resolution needs to be re-sampled, or 2. Data with lower resolution has to be interpolated to match higher resolution image. Both the approaches have drawbacks such as 1. if re-sampling is not done carefully, original highly informative data would be lost, and 2. For interpolation, if there is a massive difference in resolution interpolating all the way up could lead to heavily averaged-out image.

It is noted that fusing resolution of combined data is limited by the best resolution in input modalities. There is no single classification or segmentation model that can perform uniformly well on all the different modality types. Hence, there is a necessity to implement a single classification model for each individual platform which is far superior from a common model working for all modalities.

Embodiments herein provide a method and system to generate decision-fused classification map using different modalities in remote sensing applications. The system100 may be alternatively referred to as decision fusion system. The method enables us to provide decision fusion by combining decisions taken by different classifiers to achieve a common consensus, that is better than the decisions made by the individual classifiers. The method of the present disclosure receives a set of inputs from various modalities or satellites, which further generates segmentation map. Decision fusion model combines segmentation map to identify regions which are combinedly acceptable to mark identified region with corresponding label class. Decision fusion is done with a primary goal to improve overall performance of the classification task by exploiting multiple weak classifiers. Also, weak classifiers are individual modality-wise trained to infer class-labels from an individual data modality using Kolmogorov Arnold network-based base models. Further, all the inferred labels obtained from these weak classifiers are combined together to form unified decision.

FIG.1 illustrates an exemplary data fusion system to generate decision-fused classification map using different modalities in remote sensing applications, according to some embodiments of the present disclosure.

In an embodiment, the data fusion system 100, also referred to as system 100, includes a processor(s) 104, communication interface device(s), alternatively referred as input/output (I/O) interface(s) 106, and one or more data storage devices or a memory 102 operatively coupled to the processor(s) 104. System 100 with one or more hardware processors is configured to execute functions of one or more functional blocks of system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in memory 102. In an embodiment, the system 100 can be implemented in a variety of computing systems including laptop computers, notebooks, hand-held devices such as mobile phones, workstations, mainframe computers, servers, and the like.

The I/O interface(s) 106 may include a variety of software and hardware interfaces, for example, a user interface, a tracking dashboard to display performance of the enterprise application, and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

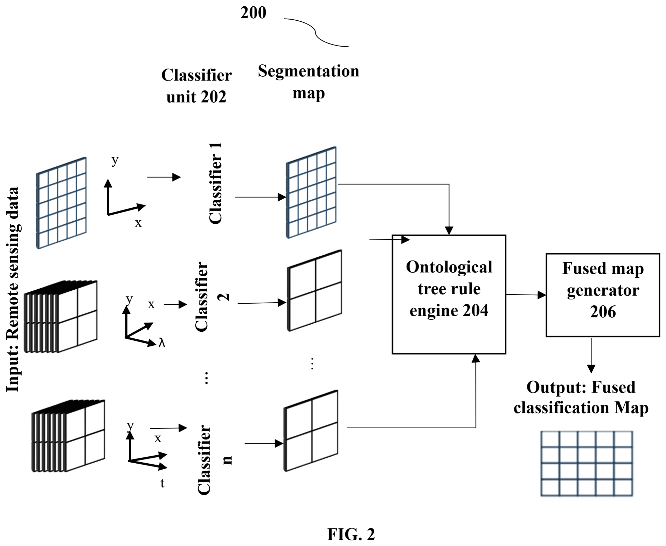

In an embodiment, the memory 102 includes a plurality of modules 110 may receive inputs such as panchromatic, hyperspectral, and a time-series very high resolution RGB image and so on , wherein the modules are depicted in FIG.2. The plurality of modules 110 include programs or coded instructions that supplement applications or functions performed by the system 100 for executing different steps involved in the process to generate decision-fused classification map using different modalities being performed by the system 100. The plurality of modules 110, amongst other things, can include routines, programs, objects, components, and data structures, which perform particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

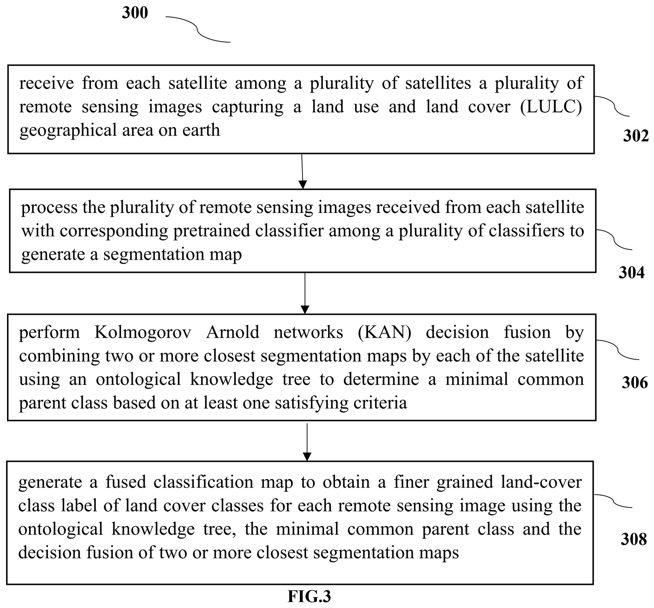

Further, the memory 102 may comprise information pertaining to input(s)/output(s) of each step performed by the processor(s) 104 of the system 100 and methods of the present disclosure. Further, the memory 102 includes a database 108. Although the database 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG.1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to FIG.2 and steps in flow diagrams in FIG.3.

FIG.2 is a functional block diagram of the data fusion system to categorize and label pixels with separate classification engines for each modality using various components of the system of FIG. 1, in accordance with some embodiments of the present disclosure.

FIG.2 includes a classifier unit 202, an ontological tree rule engine 204, and a fused map generator 206. The classifier unit 202 comprises multiple modality-specific KAN-based networks pretrained on specific data modalities. Upon deployment, it provides single modality inferred labels. The classifier unit obtains input data from various satellites or different modalities.

The ontological tree rule engine 204 obtains one or more inferred labels from the classifier unit 202 and combines to identify an overall class label, which is in-agreement with the individual modality specific labels. Also, the combined decision may agree to certain ontological rules that are laid down in terms of a knowledge tree.

The fused map generator 206 obtains output of the ontological tree map as an input and considers neighborhood decisions to decide a finer-grained classification map using an adaptive distance based expectation maximization (ADEM) technique.

FIG.3 illustrates an flow diagram of a method 300 implemented for decision-fused approach for remote sensing data using the system of FIG.1, in accordance with some embodiments of the present disclosure.

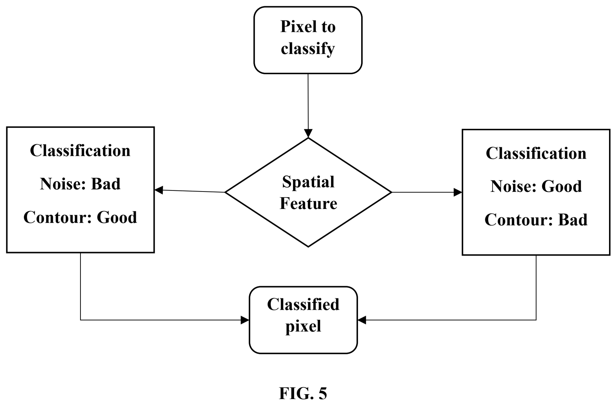

In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG.1 and FIG.2, the steps of flow diagram as depicted in FIG.3 and a use case example of identifying class label scenario in FIG.5. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to FIG.3 and the steps of the method 300, at step 302 of the method 300, the one or more hardware processors 104 are configured to receive from each satellite among a plurality of satellites, a plurality of remote sensing images capturing a land use and land cover (LULC) geographical area on earth.

High resolution remote sensing images captured from different satellites or alternatively referred as modalities face major problem of missing data. For example, regions far away from nadir point of a satellite face the problem of shadow areas, which are not captured well in the image, other challenges such as presence of thick cloud cover which is more often occurred during flood detection. More often pixels have similar label to its boundary pixels, unless it is a contour pixel considering the neighborhood information in addition to the individual pixel evidence.

In few scenarios not all modality of data is present, some data streams might get corrupted due to adverse weather conditions, solar flares, solar radio bursts (sudden outbursts of radio noise from the sun), etc. These are often close enough to satellite frequency ranges and they disrupt satellite or ground communication. In absence of such data modality for an end-to-end trained model, we still want a network robust enough to keep functioning. In such scenarios a decision fusion-based approach provides individual modality decisions which generates segmentation map and provides fused classification map.

Here, the method receives from each satellite a plurality of remote sensing images from a plurality of satellites or modalities captures land use and land cover (LULC) geographical area on earth. For example, the areas may be vegetative or non-vegetative, buildings, woodland orchard, ocean, sea etc. It may also be a disaster occurred place which can detect and provide essential information such as tracking storms, floods, wildfires, and other natural disasters, thereby enabling timely responses to mitigate the damage.

The modalities or satellites may be for example LiDAR, SAR, Oceansat - 1 and -2 (8-band multispectral satellite) RISAT - 1 and -2 (SAR sensor) and each modality performs certain detection and monitoring functions in the geographical regions. Each satellite may capture the same geographical area remote sensing images for analysis purposes. Likewise, each of the satellites receive the plurality of remote sensing images for further analysis as described below.

At step 304 of the method 300, the one or more hardware processors 104 are configured to process the plurality of remote sensing images received from each satellite with corresponding pretrained classifier among a plurality of classifiers to generate a segmentation map.

Here, the plurality of remote sensing images received by each satellite are processed by the classifier unit 202. Each modality or the satellite is configured to the classifier unit 202 which is capable of processing the plurality of remote sensing images captured by corresponding satellite. For example, the LiDAR captured remote sensing images are processed by the classifier 1 of the classifier unit and is not limited to sequence of number of satellites. Here, for example classifier 1 corresponds to first modality, where each modality may be satellites such as LiDAR, hyperspectral etc.

The classifier unit 202 is pretrained by taking sensor-specific data inputs to their respective classifier unit 202a,....202n networks with labelled ground truth images. The classifier unit is KAN-based with 3D convolutions for all data channels with a high third dimension, such as hyperspectral (multiple spectral ands) or time-series data (high resolution along the time axis). For sensors such as multispectral or panchromatic or synthetic aperture radar, standard 2D convolution KAN (Kolmogorov Arnold networks) is used to extract one or more features. Since these are only individual classifier unit, which provide the initial decisions, we can choose not to go very deep with the layers. Depending on the spatial resolution of the provided data, one can choose to go ahead with 3 to 10 layers (3 for a very low spatial resolution data and 10 for a very high spatial resolution data). Using the labelled training data, the individual B-Splines functions (within the KAN network) can be appropriately learnt by backpropagating the loss.

The classifier unit 202 is trained by providing large amount of labelled training databases which classifies each individual pixel from each sensor. Once the classifier unit 202 learns the B-Spline activation functions, the network is then pruned and freezed for inference. Upon deployment, these individual trained models are loaded by each of the plurality of remote sensing images captured by each satellite and corresponding classifier generates the segmentation map based on the learnt activation functions. B-spline or basis spline is a spline function that has minimal support with respect to a given degree, smoothness, and domain partition.

Now at step 306 of the method 300, the one or more hardware processors 104 is configured to perform Kolmogorov Arnold networks (KAN) decision fusion by combining two or more closest segmentation maps using an ontological knowledge tree to determine a minimal common parent class based on at least one satisfying criteria.

Once the segmentation map is generated for each of the satellite from the above step 304, the Kolmogorov Arnold networks (KAN) decision fusion is performed to combine two or more closest segmentation maps. The decision fusion engine is the ontological knowledge tree rule-based model which uses domain knowledge provided by remote sensing experts. The rules could be either defined by the user ( remote sensing expert), or by available linguistic models which uses large-language models.

The remote sensing experts , for example, refer to scientists who have an in-depth understanding of each of individual sensor data and their visual appearance.

The domain knowledge may be, for example, for a given terrain in a locality, the broad level types of land use areas that are present. Within each land-use areas, land-cover classes are responsible for their presence. Further, which material and minerals are to be expected in a given geological areas, etc.

Referring to FIG.2, the KAN learns non-linearities by learning the activation function itself. The major advantage of using the KAN is a symbolic representation of the output is provided as a function of all inputs. This helps in understanding inherent physics behind the inputs. KAN may be for example 1-D, 2-D, and 3-D KAN modules which enhances the ability of linear KANs in learning image classification maps from different input modalities. This further leads to the generation of M classification maps from M number of input modalities. Further, to make joint decision by the KAN and the ontological knowledge tree, each of the M generated modality or segmentation maps rely on a set of rules or a satisfying criteria to determine the minimal common parent class.

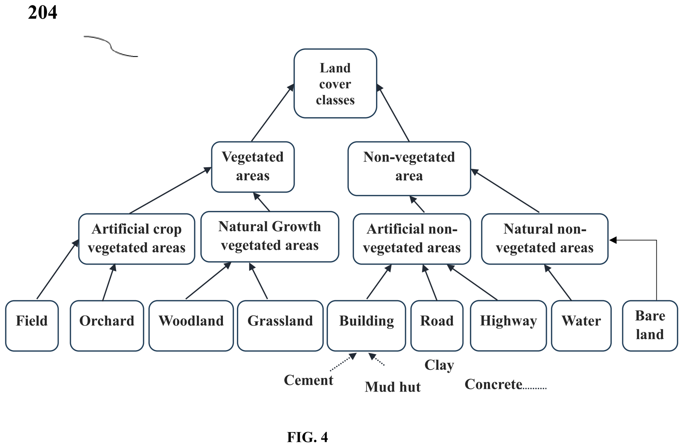

Referring now FIG.4, the ontological tree rule engine 204 obtains the two or more combination of closest segmentation maps and using a set of rules or criteria the minimal common parent class is determined. For example, the set of rules or the criteria includes a first criteria is considered as satisfied if the majority subset of two or more segmentation maps agree to a common label, then labelling region of pixels are identified as same class label for each remote sensing image.

Second criteria is satisfied if the majority subset of two or more segmentation maps agree to a common coarse label, then labelling region of pixels are identified as dispute class label for each remote sensing image.

Third criteria is satisfied if the majority subset of two or more segmentation maps has disagreement, then a set of ontological rules are executed over each pixel for label identification. The sub clause one of the third criteria is a coarser grained class label for pixels is assigned when majority fine grained classes are identified in the same parent node. The sub clause two of the third criteria is the label moving a class level upwards from the common parent node when there is no clear majority and class labels have total disagreement from different parent labels with distribution probability, and the sub clause three of the third criteria is the class label assigned by the expert with distribution probability for each class occurrence.

At step 308 of the method 300, the one or more hardware processors 104 are configured to generate a fused classification map to obtain a finer grained class label of land cover classes for each remote sensing image using the ontological knowledge tree, the minimal common parent class and the decision fusion of two or more closest segmentation maps.

Once the common parent class is determined, the fused map generator 206 generates the fused classification map by optimizing similarity measure between individual pixels for all categories of the common parent class with corresponding neighbouring pixel classes using an adaptive distance-based expectation maximization technique.

It is observed that to determine the minimal common parent class for disputed classes, the finer-grained classes for some of the pixels are lost due to disagreement during the decision fusion process. At this stage, all the assigned labels agree with both the modalities. To bring back the granularity in the class labels, the fused map generator 206 as mentioned in the below steps are utilized to assign all the high granularity class with the low-granularity class in the same tree branch, based on agreement from the maximally occurring class in its neighborhood.

Here, the fused map generator 206 (referring to FIG.5), for each remote sensing images, analyses one or more neighbouring pixel classes to decide class label of target pixel. Here, neighborhood inference block considers if all the neighboring predictions are from a class m, the target region at hand is also with a high probability belongs to class m.

Further, a standard deviation $\sigma$ is computed for all the target pixels $p$ with corresponding neighborhood pixels, and based on the standard deviation value categorizing the standard deviation into at least one of low, moderate and high. The standard deviation $\sigma$ of the distribution of intensity levels around a pixel $p$ as represented in Equation 1,

$$\sigma(x_j) = \sqrt{\frac{1}{N} \sum_{K=1}^{N} (x_k - \mu((x_j))^2} \text{ ---- Equation 1}$$

where, $j$ is the center pixel, $k$ is the variable that takes all the neighboring pixels.

The closest number of neighbor in terms of intensity level is denoted by *NCN*. NCN is defined in Equation 2,

$$NCN(x_j) = card\left\{ x_p \in \frac{neighborhood(x_j)}{|x_p = x_j|} < S \right\} \text{ ----- Equation 2}$$

Here, S is a threshold chosen empirically. The $\sigma$ is null for constant regions. Pixels within a semantic region usually has low $\sigma$ (PR). If there is a contour (PC) or a noisy region (NP) or pixels that are neighbors to noisy regions (NNP), this value becomes high. NCN is low for NP, moderate for PC, and high for NNP as in Equation 3,

$$\sigma(x_j) = \sqrt{\frac{1}{N}\sum_{K=1}^{N}(x_k - \mu((x_j))^2} \text{ --- Equation 3}$$

The fused classification map is generated by measuring a similarity match between individual pixels for all categories (low, moderate, high) based on dynamic distance $D(x_j, v_j)$ and a weighted derivative of Euclidian distance. Distance based expectation-maximization (DEM) measures the similarity between individual pixels.

The dynamic distance $D(x_j, v_j)$ is a function of a first element and a second element as in Equation 4,

$$D(x_j, v_j) = (1 - p_j)(x_j^{NG} - v_j^{NG})^2 + p_j((x_j^{spatial} - v_j^{spatial})^2 \text{ ---- Equation 4}$$

The first element $(1 - p_j)$ is a product of difference between one and a weight $p_j$, and a square difference between attributes of each target pixel and the attributes of each neighboring pixel $(x_j^{NG} - v_j^{NG})^2$. The second element $p_j((x_j^{spatial} - v_j^{spatial})^2$ is a square difference between gray level spatial features of each target pixel and the spatial features of each neighboring pixel, The weight $p_j$ is used for controlling the importance of each attribute for the classification of the pixel $x_j$ and a high $p_j$ will reward the spatial attribute over the gray level.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of fusing classification map using different modalities. The embodiment thus provides method and system to generate decision-fused classification map using different modalities in remote sensing applications. Moreover, the embodiments herein further provides the problem of missing data from remote sensing satellite images. The method enables to recover corrupted data streams corrupted due to various factors. Decision fusion helps integrating information received from multiple sources with a unified decision. Depending on the stage at which the data is fused, fusion architectures have been categorized into three levels: low-level, feature-level, and decision-level. In addition, decision fusion combines decisions taken by different classifiers to achieve a common consensus, that is better than the decisions made by the individual classifiers. Decision fusion is done with a primary goal to improve the overall performance of the classification task by exploiting multiple weak classifiers.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) to generate decision-fused classification map, the method comprising:

    receiving (302) from each satellite among a plurality of satellites, via one or more hardware processors, a plurality of remote sensing images capturing a land use and land cover (LULC) geographical area on earth;
    processing (304) via the one or more hardware processors the plurality of remote sensing images received from each satellite with corresponding pretrained classifier among a plurality of classifiers to generate a segmentation map;
    performing (306) Kolmogorov Arnold networks (KAN) decision fusion by combining two or more closest segmentation maps by each of the satellite using an ontological knowledge tree via the one or more hardware processors, to determine a minimal common parent class based on at least one satisfying criteria; and
    generating (308) a fused classification map via the one or more hardware processors to obtain a finer grained land-cover class label of land cover classes for each remote sensing image using the ontological knowledge tree, the minimal common parent class and the decision fusion of two or more closest segmentation maps.

2. The processor implemented method as claimed in claim 1, wherein the fused classification map is generated by optimizing similarity measure between individual land-cover pixels for all categories of common parent class with corresponding neighbouring pixel classes using an adaptive distance-based expectation maximization technique.

3. The processor implemented method as claimed in claim 1, wherein the minimal common parent class is determined by combining two or more closest segmentation maps based on at least one of the satisfying criteria:

    wherein a first criteria is satisfied if the majority subset of two or more segmentation maps agree to a common label, then labelling region of pixels are identified as same class label for each remote sensing image,
    wherein a second criteria is satisfied if the majority subset of two or more segmentation maps agree to a common coarse label, then labelling region of pixels are identified as dispute class label for each remote sensing image, and
    wherein a third criteria is satisfied if the majority subset of two or more segmentation maps has disagreement, then a set of ontological rules are executed over each pixel for label identification:

        assigning a coarser grained class label for pixels when majority fine grained classes are identified in the same parent node;
        assigning the label moving a class level upwards from the common parent node when there is no clear majority and class labels have total disagreement from different parent labels with distribution probability; and
        assigning the class label with distribution probability for each class occurrence.

4. The processor implemented method as claimed in claim 1, wherein the fused classification map is generated by,

    analysing one or more neighbouring pixel classes to decide class label of target pixel;
    computing a standard deviation $\sigma$ for all the target pixels $p$ with corresponding neighborhood pixels, and based on the standard deviation value categorizing the standard deviation into at least one of low, moderate and high; and
    generating the fused classification map by measuring similarity match between individual pixels for at least one category that includes low, moderate, and high based on dynamic distance $D(x_j, v_j)$ and weighted derivative of Euclidian distance.

5. The processor implemented method as claimed in claim 4, wherein the dynamic distance $D(x_j, v_j)$ is a function of a first element and a second element,

the first element is a product of difference between one and a weight $p_j$, and a square difference between attributes of each target pixel and the attributes of each neighboring pixel; and
the second element is a square difference between gray level spatial features of each target pixel and the spatial features of each neighboring pixel, wherein the weight $p_j$ is used for controlling the importance of each attribute for the classification of the pixel $x_j$ and a high $p_j$ will reward the spatial attribute over the gray level.

6. A system (100) to generate decision-fused classification map comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive from each satellite among a plurality of satellites a plurality of remote sensing images capturing a land use and land cover (LULC) geographical area on earth;
process the plurality of remote sensing images received from each satellite with corresponding pretrained classifier among a plurality of classifiers to generate a segmentation map;
perform Kolmogorov Arnold networks (KAN) decision fusion by combining two or more closest segmentation maps by each of the satellite using an ontological knowledge tree to determine a minimal common parent class based on at least one satisfying criteria; and
generate a fused classification map to obtain a finer grained land-cover class label of land cover classes for each remote sensing image using the ontological knowledge tree, the minimal common parent class and the decision fusion of two or more closest segmentation maps.

7. The system as claimed in claim 6, wherein the fused classification map is generated by optimizing similarity measure between individual land-cover pixels for all categories of common parent class with corresponding neighbouring pixel classes using an adaptive distance-based expectation maximization technique.

8. The system as claimed in claim 6, wherein the minimal common parent class is determined by combining two or more closest segmentation maps based on at least one of the satisfying criteria:

wherein a first criteria is satisfied if the majority subset of two or more segmentation maps agree to a common label, then labelling region of pixels are identified as same class label for each remote sensing image,
wherein a second criteria is satisfied if the majority subset of two or more segmentation maps agree to a common coarse label, then labelling region of pixels are identified as dispute class label for each remote sensing image, and
wherein a third criteria is satisfied if the majority subset of two or more segmentation maps has disagreement, then a set of ontological rules are executed over each pixel for label identification:

assigning a coarser grained class label for pixels when majority fine grained classes are identified in the same parent node;
assigning the label moving a class level upwards from the common parent node when there is no clear majority and class labels have total disagreement from different parent labels with distribution probability; and
assigning the class label by the expert with distribution probability for each class occurrence.

9. The system as claimed in claim 6, wherein the fused classification map is generated by,

analysing one or more neighbouring pixel classes to decide class label of target pixel;
computing a standard deviation $\sigma$ for all the target pixels $p$ with corresponding neighborhood pixels, and based on the standard deviation value categorizing the standard deviation into at least one of low, moderate and high; and
generating the fused classification map by measuring similarity match between individual pixels for at least one category that includes low, moderate, and high based on dynamic distance $D(x_j, v_j)$ and weighted derivative of Euclidian distance.

10. The system as claimed in claim 9, wherein the dynamic distance $D(x_j, v_j)$ is a function of a first element and a second element,

the first element is a product of difference between one and a weight $p_j$, and a square difference between attributes of each target pixel and the attributes of each neighboring pixel; and

the second element is a square difference between gray level spatial features of each target pixel and the spatial features of each neighboring pixel, wherein the weight $p_j$ is used for controlling the importance of each attribute for the classification of the pixel $x_j$ and a high $p_j$ will reward the spatial attribute over the gray level.

11. One or more non-transitory machine-readable information storage mediums comprising one or more instructions which when executed by one or more hardware processors cause:

receiving from each satellite among a plurality of satellites a plurality of remote sensing images capturing a land use and land cover (LULC) geographical area on earth;

processing the plurality of remote sensing images received from each satellite with corresponding pretrained classifier among a plurality of classifiers to generate a segmentation map;

performing Kolmogorov Arnold networks (KAN) decision fusion by combining two or more closest segmentation maps by each of the satellite using an ontological knowledge tree to determine a minimal common parent class based on at least one satisfying criteria; and

generating a fused classification map to obtain a finer grained land-cover class label of land cover classes for each remote sensing image using the ontological knowledge tree, the minimal common parent class and the decision fusion of two or more closest segmentation maps.

12. The one or more non-transitory machine-readable information storage mediums as claimed in claim 11, wherein the fused classification map is generated by optimizing similarity measure between individual land-cover pixels for all categories of common parent class with corresponding neighbouring pixel classes using an adaptive distance-based expectation maximization technique.

13. The one or more non-transitory machine-readable information storage mediums as claimed in claim 11, wherein the minimal common parent class is determined by combining two or more closest segmentation maps based on at least one of the satisfying criteria:

wherein a first criteria is satisfied if the majority subset of two or more segmentation maps agree to a common label, then labelling region of pixels are identified as same class label for each remote sensing image,

wherein a second criteria is satisfied if the majority subset of two or more segmentation maps agree to a common coarse label, then labelling region of pixels are identified as dispute class label for each remote sensing image, and

wherein a third criteria is satisfied if the majority subset of two or more segmentation maps has disagreement, then a set of ontological rules are executed over each pixel for label identification:

assigning a coarser grained class label for pixels when majority fine grained classes are identified in the same parent node;

assigning the label moving a class level upwards from the common parent node when there is no clear majority and class labels have total disagreement from different parent labels with distribution probability; and

assigning the class label with distribution probability for each class occurrence.

14. The one or more non-transitory machine-readable information storage mediums as claimed in claim 11, wherein the fused classification map is generated by,

analysing one or more neighbouring pixel classes to decide class label of target pixel;

computing a standard deviation $\sigma$ for all the target pixels $p$ with corresponding neighborhood pixels, and based on the standard deviation value categorizing the standard deviation into at least one of low, moderate and high; and

generating the fused classification map by measuring similarity match between individual pixels for at least one category that includes low, moderate, and high based on dynamic distance $D(x_j, v_j)$ and weighted derivative of Euclidian distance.

15. The one or more non-transitory machine-readable information storage mediums as claimed in claim 11, wherein the dynamic distance $D(x_j, v_j)$ is a function of a first element and a second element,

the first element is a product of difference between one and a weight $p_j$, and a square difference between attributes of each target pixel and the attributes of each neighboring pixel; and

the second element is a square difference between gray level spatial features of each target pixel and the spatial features of each neighboring pixel, wherein the weight $p_j$ is used for controlling the importance of each attribute for the classification of the pixel $x_j$ and a high $p_j$ will reward the spatial attribute over the gray level.

System <u>100</u>

Hardware Processor(s) <u>104</u>

I/O Interface(s) <u>106</u>

Memory <u>102</u>

Modules <u>108</u>

FIG. 1

**FIG. 2**

300

receive from each satellite among a plurality of satellites a plurality of remote sensing images capturing a land use and land cover (LULC) geographical area on earth

302

process the plurality of remote sensing images received from each satellite with corresponding pretrained classifier among a plurality of classifiers to generate a segmentation map

304

perform Kolmogorov Arnold networks (KAN) decision fusion by combining two or more closest segmentation maps by each of the satellite using an ontological knowledge tree to determine a minimal common parent class based on at least one satisfying criteria

306

generate a fused classification map to obtain a finer grained land-cover class label of land cover classes for each remote sensing image using the ontological knowledge tree, the minimal common parent class and the decision fusion of two or more closest segmentation maps

308

**FIG.3**

**204**

**FIG. 4**

**FIG. 5**

Europäisches
Patentamt

European
Patent Office

Office européen
des brevets

## EUROPEAN SEARCH REPORT

**Application Number**

EP 25 22 1087

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOHAMMADI HAMID ET AL: "An object based framework for building change analysis using 2D and 3D information of high resolution satellite images", ADVANCES IN SPACE RESEARCH, ELSEVIER, AMSTERDAM, NL, vol. 66, no. 6, 4 June 2020 (2020-06-04), pages 1386-1404, XP086232889, ISSN: 0273-1177, DOI: 10.1016/J.ASR.2020.05.041 [retrieved on 2020-06-04] | 1,2,4-7, 9-12,14, 15 | INV. G06V10/80 G06V20/13 |
| A | * Title * * first bullet point; page 1388, left-hand column, paragraph 2; figures 4-6,10; tables 1,2 * * 2.2.3.2 3D change map generation using CNN; page 1392 * * 3.2.4 Evaluation of building extraction step; page 1395 * ----- | 3,8,13 | |
| A | ALI JAMALI ET AL: "How to Learn More? Exploring Kolmogorov-Arnold Networks for Hyperspectral Image Classification", ARXIV.ORG, CORNELL UNIVERSITY LIBRARY, 201 OLIN LIBRARY CORNELL UNIVERSITY ITHACA, NY 14853, 22 June 2024 (2024-06-22), XP091797384, * the whole document * ----- -/-- | 1-15 | **TECHNICAL FIELDS SEARCHED (IPC)** G06V |

The present search report has been drawn up for all claims

| Place of search | Date of completion of the search | Examiner |
|---|---|---|
| The Hague | 9 February 2026 | Meier, Ueli |

EPO FORM 1503 03.82 (P04C01)

page 1 of 2

**Europäisches Patentamt**
**European Patent Office**
**Office européen des brevets**

# EUROPEAN SEARCH REPORT

Application Number

EP 25 22 1087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI YANSHENG ET AL: "Combining deep learning and ontology reasoning for remote sensing image semantic segmentation", KNOWLEDGE-BASED SYSTEMS, [Online] vol. 243, 1 May 2022 (2022-05-01), page 108469, XP093363341, AMSTERDAM, NL ISSN: 0950-7051, DOI: 10.1016/j.knosys.2022.108469 Retrieved from the Internet: URL:https://pdf.sciencedirectassets.com/271505/1-s2.0-S0950705122X00051/1-s2.0-S0950705122001939/main.pdf?hash=57dee39d3b1fe95ade32d118e939fe6600365b694b5ef2cec9d3fdc1bf78b484&host=68042c943591013ac2b2430a89b270f6af2c76d8dfd086a07176afe7c76c2c61&pii=S0950705122001939&tid=spdf-cfe0b254-9eb4-439c-b2a1-a5b> [retrieved on 2026-02-06] * the whole document * | 1-15 | |

-----

TECHNICAL FIELDS SEARCHED (IPC)

The present search report has been drawn up for all claims

| Place of search | Date of completion of the search | Examiner |
|---|---|---|
| The Hague | 9 February 2026 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202521001796